# EUROPEAN PATENT SPECIFICATION

(11) **EP 1 796 830 B1**
(45) Date of publication and mention of the grant of the patent: **05.10.2011**
(21) Application number: 05817939.1
(22) Date of filing: 14.12.2005
(51) Int. Cl.: B01J 19/12

(54) **MICROWAVE CHEMICAL REACTOR**
CHEMISCHER MIKROWELLEN-REAKTOR
REACTEUR CHIMIQUE A MICRO-ONDES

(30) Priority: 24.12.2004 IT PI20040097
(43) Date of publication of application: 20.06.2007
(73) Proprietor: CNR Consiglio Nazionale Delle Ricerche, 00185 Roma (IT)
(72) Inventor: LONGO, Iginio, I-56123 Pisa (IT)
(74) Representative: Celestino, Marco
(86) International application number: PCT/IB2005/003782
(87) International publication number: WO 2006/067579

(56) References cited:
- DE-U1- 9 421 652
- US-A- 5 304 766
- US-B1- 6 403 939

## Description

### Field of the invention

The present invention relates to a microwave heating apparatus that can be used as heat source for chemical and/or physical processes.

Furthermore, the invention relates to a method that uses this apparatus for carrying out such processes.

### Background of the invention

As well known, many chemical processes have to be triggered by high temperature, and other processes are strongly accelerated by high temperature. Therefore, in many cases a reacting material is supplied by energy from a heat source. Traditionally, this is made through apparatus that transfer heat to the reacting material by conductivity or convention. However, such apparatus are often inefficient, since they do not perform a uniform distribution of temperature in the reacting material or they would require long time for bringing the reaction to a predetermined temperature.

In the last years, microwave apparatus are commonly used in research laboratories and in the industry. In this type of apparatus, a quick variation of the electromagnetic field that influences the material causes its direct heating and with a maximum efficiency with respect to traditional heating methods.

A microwave apparatus typically comprises an oven in which the reacting material is put and then irradiated with radio waves at high frequency. Microwaves are generated by a Magnetron that causes an electronic beam to oscillate at a very high frequency, thus creating microwaves, or more recently they are generated by solid state oscillating devices. These apparatus have relevant advantages with respect to traditional heat source. In fact, they are capable of providing an exceptionally quick heating of the reacting material and of quickly achieving higher temperatures than other conventionally used systems.

However, the technology of heating with microwave ovens has some drawbacks.

Firstly, reactors used for this type of technology have to be made of suitable materials, i.e. materials transparent to microwaves. The used microwave reactors are normally closed in containers with metal walls that are scarcely manageable and are accessible in a difficult way. Furthermore, it is not possible to use microwaves in case of reactions that take place at high pressures, since metal reactors are required with high thicknesses, and for these reactions they cannot be crossed by microwaves.

Other drawbacks are the high cost and the high energy consumption required by the microwave technology that strongly limits its diffusion on a large scale.

US5304766, US6403939, DE9421652U, US4460814, show typical microwave applications using a microwave cavity, and affected by the above drawbacks.

### Summary of the invention

It is therefore a first feature of the invention to provide a microwave heating apparatus for chemical-physical processes that provides a method for heating a reacting material that is more effective and practical with respect to the devices of prior art.

It is another feature of the invention to provide a microwave heating apparatus for chemical-physical processes that provides an energy saving and that is cheap with respect to apparatus of prior art.

It is also a feature of the invention to provide a microwave heating apparatus for chemical-physical processes for applying the microwave technology also in the field of reactions that take place in a condition of high pressure-It is also a feature of the invention to provide a microwave heating apparatus for chemical-physical processes for activating chemical reactions in a homogeneous or heterogeneous phase, either continuous or pulsed.

These and other features are accomplished with one exemplary microwave heating apparatus for chemical-physical processes, according to the present invention, said apparatus comprising:
- a microwave source,
- a reaction container in which a reacting material is arranged,
- means for transferring microwaves generated by the source to the reacting material, said means for transferring being arranged directly in the reaction container.

In an exemplary embodiment of the invention, the apparatus comprises also means for emitting one form of energy selected from the group comprised of:
- visible waves,
- UV waves,
- infrared waves,
or a combination thereof.

Advantageously, the reaction container can provide a coating layer made of a heat-insulating material.

In particular, the apparatus can comprise, furthermore, at least one sensor for measuring a process parameter, for example pressure or temperature, during the development of the reaction.

Advantageously, the apparatus comprises also means for mixing the reacting material, for example a mixer of the type with magnetic bar.

Preferably, the means for transferring the microwaves comprises at least one microwave antenna, for example of co-axial type or in a wave guide, which has at an end a connector for being operatively connected to the microwave source, and at the other end a microwave emitter suitable for irradiating the reacting material.

Advantageously, the antenna is coated with a closed sheath of inert material, for example PTFE, glass, ceramics etc., suitable for avoiding a direct contact with the reagents.

In a possible configuration of the invention, the means for transferring the microwaves comprises at least two antennas, which are excited in phase by the source in order to obtain a desired heating configuration. More in detail, the heating configuration is made exploiting the principle of interference of coherent electromagnetic waves emitted by each antenna.

In particular, the end of the antenna at which the transmission of microwaves is performed is of the dipolar type, or monopolar, and has a shape selected from the group comprised of:
- a spiral,
- coated with dielectric material,
- with a radiating slit
- with more radiating slits,
- with a metal tip.

In particular, the co-axial microwave antenna comprises:
- an inner conductor,
- a dielectric that coats the inner conductor for all its length,
- an outer conductor that covers coaxially the dielectric except from an end portion.

Advantageously, the microwave antenna can furthermore provide:
- a choke mounted out of the outer conductor near the end portion, the above described choke comprising a co-axial conductive portion of diameter higher than the outer conductor.

Advantageously, the reaction container has a housing in communication with the outside that crosses it at least for a part thereof. The housing is suitable for receiving, in use, the above described means for transmission.

In particular, the housing is coated with dielectric material transparent to microwaves and prevents from a direct contact of the transmission means with the reacting material.

Advantageously, the reaction container has at least one opening through which it is possible to approach the reacting material for arranging means for measurement, for example of temperature and pressure.

In an exemplary embodiment of the invention, the reaction container comprises:
- a reaction chamber having the walls made of material for insulating from the heat flux generated by microwaves,
- an external jacket of a metal material of determined thickness capable of resisting to high pressures.

Advantageously, means are provided for modulating the frequency of microwaves to adjust the power transferred to the reacting material responsive to the type of process.

The microwave apparatus, as above described, increases considerably the control, the speed, the selectivity and the stability of the processes. Furthermore, the power emitted by the antenna is adsorbed by the reacting material allowing the operator to work in safety conditions with respect to the emissions of electromagnetic waves. In case of use of high heating power, to avoid residue emissions out of the reaction container, the latter has a shielding layer that is opaque to microwaves, for example, a film, a varnish, or a metal braiding.

According to another aspect of the invention, a method for heating with microwaves a reacting material in chemical-physical processes comprises the steps of:
- generating microwaves by a source of power,
- irradiating with microwaves the reacting material contained in a reaction container,
whose main feature is that the irradiating step of the reacting material is made through means for transferring the microwaves arranged directly within the reaction container.

### Brief description of the drawings

The invention will now shown with the following description of an exemplary embodiment thereof, exemplifying but not limitative, with reference to the attached drawings wherein:
- figure 1 shows diagrammatically an elevational front view of a microwave heating apparatus for chemical-physical processes, according to the invention,
- figure 2 shows diagrammatically an elevational front view of a first exemplary embodiment of a reaction container that can be used in the apparatus of figure 1,
- figures 5 and 6 show two different exemplary embodiments of microwave antenna that can be used in the apparatus of figure 1 in operative conditions,
- figures from 7A to 7F show diagrammatically elevational side views of some exemplary embodiments of co-axial antennas that can be used in the apparatus of figure 1.

### Description of a preferred exemplary embodiment

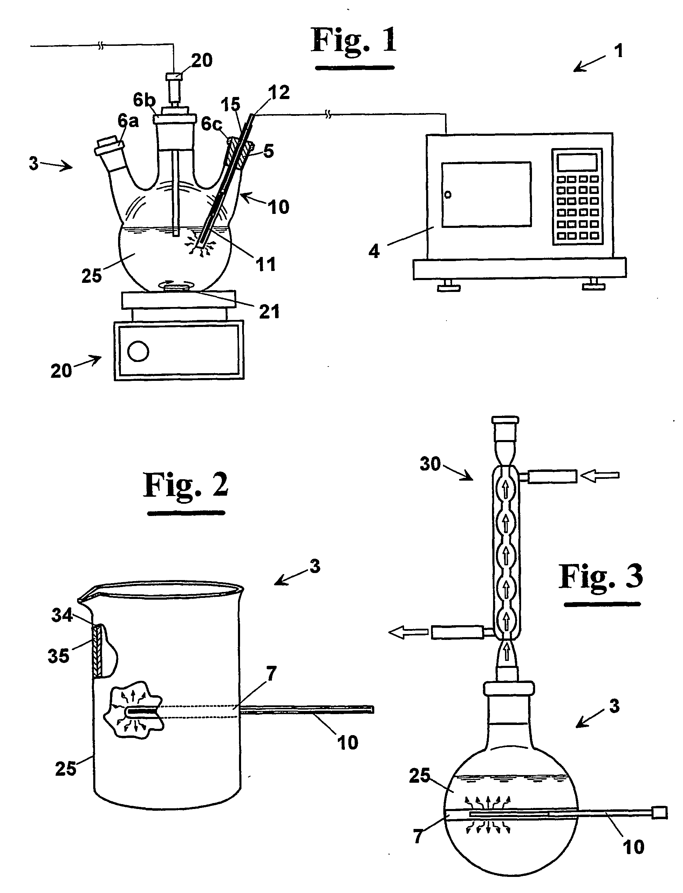

With reference to figure 1, a microwave heating apparatus 1 for chemical-physical processes, according to the present invention, comprises a microwave source 4, for example a magnetron or a klystron or a solid state oscillator (FET transistor), operatively connected to an end of an antenna 10 at a connector 12. Antenna 10 is put into a reaction container 3 where it irradiates with microwaves a reacting material 25 at its end 11. In particular, antenna 10 can be coated with a sheath 15 that prevents from a direct contact with the reacting material 25 (figure 1), or alternatively, can be put into in a housing 7 made in the container 3. Housing 7, which is made of a material transparent to microwaves, can cross reaction container 3 for a part thereof (figure 2), or for all its width (figure 3).

The arrangement of antenna 10 in the reacting material 25 provides a quick and effective heating. Furthermore, it is possible to increase considerably the selectivity, the control and the efficiency of the chemical-physical processes to which the heating technique above described is applied. This allows also to provide a considerable energy saving with respect to apparatus of prior art.

Reaction container 3 can be a common container for research laboratories, for example a sphere with three apertures 6a, 6b and 6c (figure 1), or alternatively, a beacker (figure 2). Reaction container 3 can be of glass or other inert material, which can be coated with a inner layer of PTFE, alumina, or other material resistant at high temperature and pressures.

In case it is necessary to use high power, it is suitable to have reaction container 3 coated with a shielding layer 35, which is next to the external walls 34 of the container 3 (figure 2) and opaque to microwaves. This allows to avoid a propagation of microwaves out of the container 3. The shielding layer can be made for example by a film, a varnish, or a metal braiding that reflect microwaves in the reacting material 25.

This allows to an operator to work in safety conditions.

For mixing effectively the reacting material 25, in reaction container 3 a magnetic bar 21 can be put that is wheeled in the reacting material 25 by a mixer 20.

In case of a sphere 3 the apertures 6a, 6b and 6c can be used for arranging sensors 20 that monitor continuously some process parameters, for example the pressure and/or the temperature (figure 1). Therefore, the course of the process can be measured instantly and, for example, the frequency and the power of microwaves emitted by antenna 10 can be changed correspondingly.

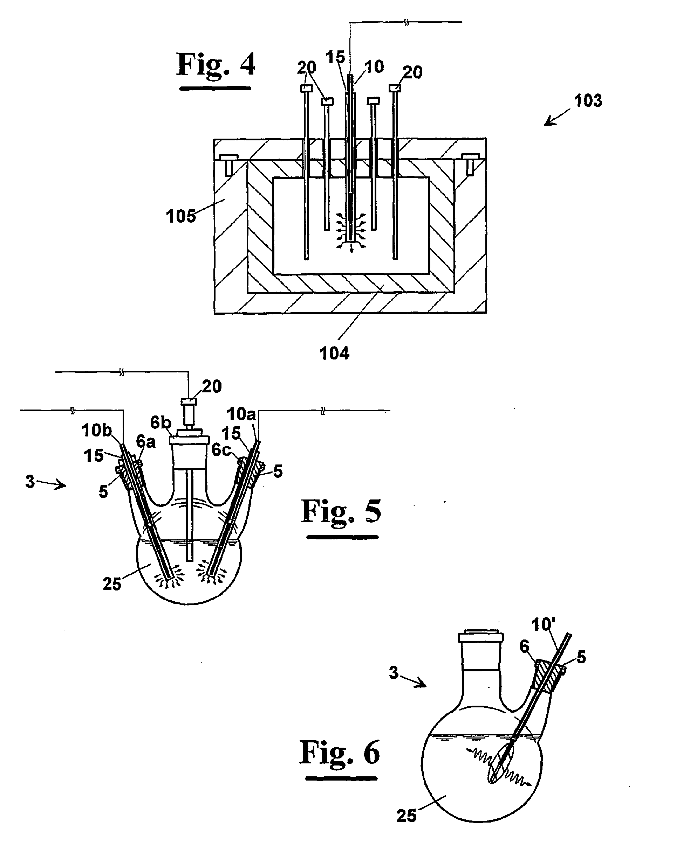

According to an exemplary embodiment of the invention, it is possible to irradiate the reacting material 25 contained in reaction container 3 through a plurality of antennas, for example two antennas 10a and 10b (figure 5), which can be excited in phase by the same source. In this way, it is possible to provide a heating configuration with a geometry that is responsive to different operative reasons required by a specific process, exploiting the phenomenon of the interference of coherent electromagnetic waves. The heating apparatus according to the invention is, furthermore, highly flexible and implemented to many types of different processes. For example, in case of reactions exothermic it is possible to associate a reflux coolant of Allhin type 30 (figure 3) to a reaction container 3 in which antenna 10 works. In the case, instead, of processes that occur at high pressures a reaction container 103 (figure 5) can be provided having a inner jacket 104 of coating thermo-insulating material, for example Teflon, contained in a jacket of a metal material 105 of suitable thickness. In this way it is possible to use the heating technique by means of microwaves for carrying out processes that are performed at high pressures.

In figure 6 the possibility is diagrammatically shown of using as heating means an antenna 10' capable of emitting, in addition to microwaves, visible light waves, UV waves, infrared waves, or a combination thereof, for particular types of processes.

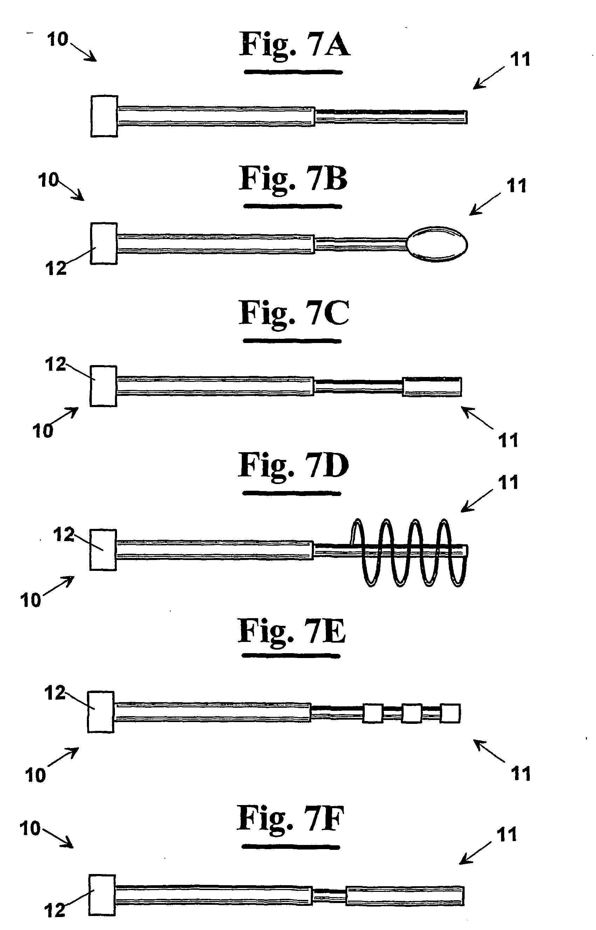

In figures from 7A to 7F some possible exemplary embodiments are shown of an antenna 10 that can be used as microwave emitter. In particular, co-axial antenna 10 can be of dipolar type (figures 7A-7D) and can provide at the microwave emitting end a configuration with a dielectric-tip (figure 7A), a sphere tip (figure 7B), a metal tip (figure 7C), a coil-tip (figure 7D), a slotted tip (figure 7E), multislotted tip (figure 7F). Alternatively, antenna 10 can be of the monopolar type and can be carried out similar to the above described exemplary embodiments. Furthermore, antenna 10 can be provided with a trap or "choke" suitable for preventing the emitted microwaves to spread back towards the source.

The foregoing description of a specific embodiment will so fully reveal the invention according to the conceptual point of view, so that others, by applying current knowledge, will be able to modify and/or adapt for various applications such an embodiment without further research and without parting from the invention, and it is therefore to be understood that such adaptations and modifications will have to be considered as equivalent to the specific embodiment. The means and the materials to realise the different functions described herein could have a different nature without, for this reason, departing from the field of the invention. It is to be understood that the phraseology or terminology employed herein is for the purpose of description and not of limitation.

## Claims

1. Microwave heating apparatus (1) for chemical-physical processes comprising:
- a microwave source (4),
- a reaction container (3) in which a reacting material (25) can be arranged,
- a means for transferring the microwaves generated by the microwave source (4) to said reacting material (25),
wherein said means for transferring comprises at least one antenna (10) which has at an end a connector that connects operatively said antenna to said microwave source, and at the other end a microwave emitter suitable for irradiating said reacting material, wherein said antenna (10) is of co-axial type having:
- an inner conductor,
- a dielectric that coats said inner conductor for all its length,
- an outer conductor that covers coaxially said dielectric except from an end portion; and said antenna (10) is arranged directly in said reaction container,
wherein said reaction container has an aperture (6, 6a, 6b,6c) and wherein said aperture is adapted for receiving, in use, said coaxial antenna (10), such that said coaxial antenna once put in said reaction container (3) through said aperture (6, 6a, 6b,6c) irradiates with microwaves said reacting material (25) at said antenna end (11).

2. Apparatus, according to claim 1, wherein said reaction container is made of glass or other inert material.

3. Apparatus, according to claim 1, wherein said said reaction container is a common container for research laboratories.

4. Apparatus, according to claim 1, wherein said reaction container is selected from the group comprised of:
- a container providing a coating layer made of a heat-insulating material
- a container having a shielding layer opaque to said microwaves suitable for avoiding the propagation out of it.

5. Apparatus, according to claim 1, comprising furthermore means for irradiating in said reacting material one further form of energy selected from the group comprised of:
- visible waves,
- UV waves,
- infrared waves,
- or a combination thereof.

6. Apparatus, according to claim 1, comprising, furthermore, at least one sensor for measuring a process parameter during the development of the reaction.

7. Apparatus, according to claim 1, comprising, furthermore, means for mixing the reacting material.

8. Apparatus, according to claim 1, wherein said antenna is coated with a closed sheath of inert material suitable for avoiding the direct contact with said reacting material.

9. Apparatus, according to claim 1, wherein said means for transferring comprises at least two antennas, which are excited in phase from said source in order to obtain a desired heating configuration, by exploiting the principle of interference of the coherent electromagnetic waves emitted by each antenna.

10. Apparatus, according to claims 1, wherein said end of said antenna at which the transmission of microwaves is performed has a shape selected from the group comprised of:
- a spiral,
- coated with dielectric material,
- with a radiating slit
- with more radiating slits,
- with metal tip.

11. Apparatus, according to claim 1, wherein said antenna comprises furthermore:
- a choke mounted out of said outer conductor near said end portion, said choke comprising a co-axial conductive portion of diameter higher than said outer conductor.

12. Apparatus, according to claim 1, wherein said reaction container has a housing coated with dielectric material transparent to microwaves suitable for receiving said means for transmission, said housing crossing said container for at least one part thereof.

13. Apparatus, according to claim 1, wherein said reaction container comprises:
- a reaction chamber having the walls made of a material for insulating from the heat flux generated by microwaves,
- an external jacket of a metal material of determined thickness capable of resisting to high pressures.

14. Microwave heating method for carrying out chemical-physical processes consisting of:
- providing a microwave source (4),
- arranging a reacting material (25) in a reaction container (3),
transferring microwaves generated by the microwave source (4) to said reacting material (25), by at least one antenna (10) which has at an end a connector that connects operatively said antenna to said microwave source, and at the other end a microwave emitter suitable for irradiating said reacting material, wherein said antenna (10) is of co-axial type having:
- an inner conductor,
- a dielectric that coats said inner conductor for all its length,
- an outer conductor that covers coaxially said dielectric except from an end portion;
- and said antenna (10) is arranged directly in said reaction container,
wherein said reaction container has an aperture (6, 6a, 6b,6c) and wherein said aperture is adapted for receiving, in use, said coaxial antenna (10), such that said coaxial antenna once put in said reaction container (3) through said aperture (6, 6a, 6b,6c) irradiates with microwaves said reacting material (25) at said antenna end (11).

## Patentansprüche

1. Eine Mikrowellen-Heizvorrichtung (1) für chemischphysikalische Prozesse, mit:
- einer Mikrowellenquelle (4),
- einem Reaktionsbehälter (3), in dem ein Reaktionsmaterial (25) angeordnet werden kann,
- einem Mittel zum Übertragen der durch die Mikrowellenquelle (4) erzeugten Mikrowellen zu dem Reaktionsmaterial (25),
wobei das Mittel zum Übertragen mindestens eine Antenne (10) umfasst, die an einem Ende einen Verbinder aufweist, der die Antenne funktionsmäßig mit der Mikrowellenquelle verbindet, und an dem anderen Ende einen Mikrowellen-Emitter aufweist, der geeignet ist zum Bestrahlen des Reaktionsmaterials,
wobei die Antenne (10) vom koaxialen Typ ist und aufweist:
- einen inneren Leiter,
- ein Dielektrikum, das den inneren Leiter über seiner gesamten Länge überzieht,
- einen äußeren Leiter, der das Dielektrikum mit Ausnahme eines Endabschnitts koaxial abdeckt,
und wobei die Antenne (10) direkt in dem Reaktionsbehälter angeordnet ist,
wobei der Reaktionsbehälter eine Öffnung (6,6a,6b,6c) besitzt und wobei die Öffnung eingerichtet ist, um, bei Verwendung, die koaxiale Antenne (10) aufzunehmen, derart, dass die koaxiale Antenne, wenn sie einmal in den Reaktionsbehälter (3) durch die Öffnung (6,6a,6b,6c) gesteckt ist, das Reaktionsmaterial (25) an dem Antennenende (11) mit Mikrowellen bestrahlt.

2. Die Vorrichtung gemäß Anspruch 1, wobei der Reaktionsbehälter aus Glas oder einem anderen inerten Material hergestellt ist.

3. Die Vorrichtung gemäß Anspruch 1, wobei der Reaktionsbehälter ein allgemeiner Behälter für Forschungslaboratorien ist.

4. Die Vorrichtung gemäß Anspruch 1, wobei der Reaktionsbehälter ausgewählt ist aus der Gruppe, die aufweist:
- einen Behälter, welcher eine Beschichtung aus einem wärmeisolierenden Material vorsieht,
- einen Behälter, welcher eine für die Mikrowellen opake Abschirmschicht aufweist, die geeignet ist, die Ausbreitung aus diesem zu vermeiden.

5. Die Vorrichtung gemäß Anspruch 1, ferner mit einem Mittel zum Ausstrahlen einer weiteren Form von Energie in bzw. auf das Reaktionsmaterial, die aus der Gruppe ausgewählt ist, die aufweist:
- sichtbare Wellen,
- UV-Wellen,
- Infrarote Wellen,
- oder eine Kombination davon.

6. Die Vorrichtung gemäß Anspruch 1, ferner mit mindestens einem Sensor zum Messen eines Prozessparameters während dem Fortschritt der Reaktion.

7. Die Vorrichtung gemäß Anspruch 1, ferner mit einem Mittel zum Mischen des Reaktionsmaterials.

8. Die Vorrichtung gemäß Anspruch 1, wobei die Antenne mit einer geschlossenen Hülle aus inertem Material beschichtet ist, die geeignet ist, den direkten Kontakt mit dem Reaktionsmaterial zu vermeiden.

9. Die Vorrichtung gemäß Anspruch 1, wobei das Mittel zum Übertragen mindestens zwei Antennen aufweist, die in Phase von der Quelle angeregt werden, um eine gewünschte Heizkonfiguration zu erhalten, indem das Prinzip von Interferenz der kohärenten elektromagnetischen Wellen, die durch jede Antenne emittiert werden, ausgenutzt wird.

10. Die Vorrichtung gemäß Anspruch 1, wobei das Ende der Antenne, an dem die Übertragung von Mikrowellen erfolgt, eine Form besitzt, die aus der Gruppe ausgewählt ist, die aufweist:
- eine Spirale,
- beschichtet mit dielektrischem Material,
- mit einem Abstrahlschlitz,
- mit mehreren Abstrahlschlitzen,
- mit einer Metallspitze.

11. Die Vorrichtung gemäß Anspruch 1, wobei die Antenne ferner aufweist:
- eine Drossel, die außerhalb des äußeren Leiters nahe dem Endabschnitt angebracht ist, wobei die Drossel einen koaxialen leitenden Abschnitt eines Durchmessers aufweist, der größer ist als der äußere Leiter.

12. Die Vorrichtung gemäß Anspruch 1, wobei der Reaktionsbehälter ein Gehäuse besitzt, das mit dielektrischem Material beschichtet ist, welches für Mikrowellen transparent ist, und das geeignet ist, um das Mittel zum Übertragen aufzunehmen, wobei das Gehäuse den Behälter bei mindestens einen Teil desselben kreuzt.

13. Die Vorrichtung gemäß Anspruch 1, wobei der Reaktionsbehälter aufweist:
- eine Reaktionskammer, deren Wände aus einem Material zum Isolieren gegenüber dem durch Mikrowellen erzeugten Wärmestrom hergestellt sind,
- einen externen Mantel aus einem Metallmaterial bestimmter Dicke, das geeignet ist, hohen Drücken zu widerstehen.

14. Ein Mikrowellen-Heizverfahren zum Ausführen von chemisch-physikalischen Prozessen, bestehend aus:
- Vorsehen einer Mikrowellenquelle (4)
- Anordnen eines Reaktionsmaterials (25) in einem Reaktionsbehälter (3),
- Übertragen von Mikrowellen, die durch die Mikrowellenquelle (4) erzeugt werden, zu dem Reaktionsmaterial (25) durch mindestens eine Antenne (10), welche an einem Ende einen Verbinder aufweist, der die Antenne funktionsmäßig mit der Mikrowellenquelle verbindet, und an dem anderen Ende einen Mikrowellen-Emitter aufweist, der geeignet ist, das Reaktionsmaterial zu bestrahlen, wobei die Antenne (10) vom koaxialen Typ ist und aufweist:
- einen inneren Leiter,
- ein Dielektrikum, das den inneren Leiter über seiner gesamten Länge überzieht,
- einen äußeren Leiter, der das Dielektrikum mit Ausnahme eines Endabschnitts koaxial abdeckt,
und wobei die Antenne (10) direkt in dem Reaktionsbehälter angeordnet ist,
wobei der Reaktionsbehälter eine Öffnung (6,6a,6b,6c) aufweist, und wobei die Öffnung eingerichtet ist, um, bei Verwendung, die koaxiale Antenne (10) aufzunehmen, derart, dass die koaxiale Antenne, wenn sie einmal in den Reaktionsbehälter (3) durch die Öffnung (6,6a,6b,6c) eingesetzt ist, das Reaktionsmaterial (25) an dem Antennenende (11) mit Mikrowellen bestrahlt.

## Revendications

1. Appareil (1) de chauffage à micro-ondes pour des procédés chimio-physiques comprenant :
- une source (4) de micro-ondes,
- un récipient (3) de réaction dans lequel on peut placer une substance (25) en réaction,
- un moyen de transférer les micro-ondes générées par la source (4) de micro-ondes vers ladite substance (25) en réaction
**caractérisé en ce que** le moyen de transfert comprend au moins une antenne (10) ayant à une extrémité un connecteur raccordant ladite antenne de façon opératoire à ladite source de micro-ondes, et à l'autre extrémité un émetteur de micro-ondes adapté à l'irradiation de ladite substance en réaction,
**caractérisé en ce que** ladite antenne (10) est du type coaxial ayant :
- un conducteur central,
- un diélectrique recouvrant ledit conducteur central sur toute sa longueur,
- un conducteur extérieur qui couvre ledit diélectrique sur toute sa longueur hormis une portion en extrémité ;
et ladite antenne (10) est placée directement dans ledit récipient de réaction,
**caractérisé en ce que** ledit récipient de réaction possède un orifice (6, 6a, 6b,6c) et **en ce que** ledit orifice est adapté pour recevoir, pendant l'utilisation, ladite antenne coaxiale (10) de telle façon que ladite antenne coaxiale, une fois insérée dans ledit récipient de réaction (3) par ledit orifice (6,6a, 6b,6c), irradie ladite substance (25) en réaction avec des micro-ondes de l'extrémité (11) de ladite antenne.

2. Appareil selon la revendication 1, **caractérisé en ce que** ledit récipient de réaction est réalisé en verre ou un autre matériau inerte.

3. Appareil selon la revendication 1, **caractérisé en ce que** ledit récipient de réaction est un récipient d'utilisation commune dans les laboratoires de recherches.

4. Appareil selon la revendication 1, **caractérisé en ce que** ledit récipient de réaction est sélectionné dans le groupe comprenant :
- un récipient muni d'une couche de revêtement en matière thermo-isolante,
- un récipient muni d'une couche de blindage opaque auxdites micro-ondes adapté pour empêcher qu'elles ne se propagent en-dehors dudit récipient.

5. Appareil selon la revendication 1, comprenant en outre des moyens d'irradier dans ladite substance en réaction une forme supplémentaire d'énergie sélectionnée dans le groupe comprenant :
- les ondes visibles,
- les ondes UV,
- les ondes infrarouges,
ou une combinaison de celles-ci.

6. Appareil selon la revendication 1, comprenant en outre au moins un capteur pour mesurer un paramètre du procédé au cours du développement de la réaction.

7. Appareil selon la revendication 1, comprenant en outre des moyens de mélanger la substance en réaction.

8. Appareil selon la revendication 1, **caractérisé en ce que** ladite antenne est revêtue d'une gaine close d'une matière inerte adaptée à empêcher un contact direct avec ladite substance en réaction.

9. Appareil selon la revendication 1, **caractérisé en ce que** ledit moyen de transfert comprend au moins deux antennes, lesquelles sont excitées en phase à partir de ladite source de façon à obtenir une configuration de chauffage souhaitée en exploitant le principe d'interférence des ondes électromagnétiques cohérentes émises par chaque antenne.

10. Appareil selon la revendication 1, **caractérisé en ce que** ladite extrémité de ladite antenne à laquelle se fait la transmission des micro-ondes possède une forme sélectionnée dans le groupe comprenant :
- une spirale,
- revêtue de matière diélectrique,
- avec une fente rayonnante,
- avec des fentes rayonnantes supplémentaires,
- avec un embout métallique.

11. Appareil selon la revendication 1, **caractérisé en ce que** ladite antenne comprend en outre :
- une inductance d'arrêt montée en-dehors dudit conducteur extérieur à proximité de ladite portion d'extrémité, ladite inductance comprenant une portion coaxiale conductrice ayant un diamètre supérieur à celui dudit conducteur extérieur.

12. Appareil selon la revendication 1, **caractérisé en ce que** ledit récipient de réaction possède un boîtier revêtu de matière diélectrique transparente aux micro-ondes adapté pour recevoir ledit moyen de transmission, ledit boîtier traversant ledit récipient sur au moins une partie de celui-ci.

13. Appareil selon la revendication 1, **caractérisé en ce que** ledit récipient de réaction comprend :
- une chambre à réaction ayant des parois faites d'une matière pour isoler du flux de chaleur généré par les micro-ondes,
- une gaine extérieure en matière métallique d'une épaisseur déterminée capable de résister aux pressions élevées.

14. Méthode de chauffage aux micro-ondes pour réaliser des procédés chimio-physiques comprenant :
- la provision d'une source (4) de micro-ondes,
- la disposition d'une substance (25) réactive dans un récipient (3) de réaction,
- le transfert de micro-ondes générées par la source (4) de micro-ondes vers ladite substance (25) en réaction, par au moins une antenne (10) ayant à une extrémité un connecteur qui raccorde ladite antenne de façon opératoire ladite source de micro-ondes, et à l'autre extrémité un émetteur de micro-ondes adapté pour irradier ladite substance en réaction, **caractérisée en ce que** ladite antenne (10) est du type coaxial ayant :
- un conducteur central,
- un diélectrique qui recouvre ledit conducteur central sur toute sa longueur,
- un conducteur extérieur qui recouvre de façon coaxiale ledit diélectrique hormis une portion en extrémité ;
- et ladite antenne (10) est disposée directement dans ledit récipient de réaction,
**caractérisée en ce que** ledit récipient de réaction possède un orifice (6,6a, 6b,6c) et **en ce que** ledit orifice est adapté pour recevoir, pendant l'utilisation, ladite antenne (10) coaxiale, de telle façon que ladite antenne coaxiale, une fois insérée dans ledit récipient (3) de réaction par ledit orifice (6,6a, 6b,6c), irradie ladite substance en réaction avec des micro-ondes de ladite extrémité (11) de l'antenne.
